# EUROPEAN PATENT SPECIFICATION

(11) **EP 2 788 176 B1**
(45) Date of publication and mention of the grant of the patent: **02.08.2017**
(21) Application number: 12778448.6
(22) Date of filing: 24.09.2012
(51) Int. Cl.: B29C 70/44, F03D 1/06, B29L 31/08, B21K 3/04

(54) **METHOD OF MANUFACTURING A WIND TURBINE BLADE AND A WIND TURBINE BLADE**
VERFAHREN ZUR HERSTELLUNG EINER WINDTURBINENSCHAUFEL UND WINDTURBINENSCHAUFEL
PROCÉDÉ DE FABRICATION D'UNE PALE DE TURBINE ÉOLIENNE ET PALE DE TURBINE ÉOLIENNE

(30) Priority: 09.12.2011 WO PCT/JP2011/006904
(43) Date of publication of application: 15.10.2014
(73) Proprietor: Mitsubishi Heavy Industries, Ltd., Tokyo 108-8215 (JP); Euros Entwicklungsgesellschaft für Windkraftanlagen mbH, 13088 Berlin (DE)
(72) Inventor: SAKIMURA, Tetsuya, Tokyo 108-8215 (JP); JENZEWSKI, Dominique, 13088 Berlin (DE); CREMER, Andreas, London Greater London W1K 6WL (GB)
(74) Representative: RGTH
(86) International application number: PCT/JP2012/006045
(87) International publication number: WO 2013/084390

(56) References cited:
- EP-A1- 2 255 957
- WO-A1-03/035380
- US-B2- 7 364 407

## Description

### [Technical Field]

The disclosure relates to a method of manufacturing a wind turbine blade.

### [Background Art]

Since the trend in wind turbine development has evolved towards an enlarged size of wind turbines, also the size of the wind turbine blades has increased to a large extent, especially concerning the blades of offshore wind turbines. As a consequence of this development, manufacturing wind turbine blades is an extremely difficult task whose importance has risen significantly during the recent years.

Due to their enormous size, wind turbine blades are not manufactured in one piece. Usually, two blade half shells are manufactured separately and subsequently bonded. It is also common to produce each blade half shell in several production steps out of several blade half shell parts. These parts are bonded in a joining mold to form an entire blade half shell. For bonding the different blade half shell parts, usually adhesives such as gluing paste are used. A disadvantage of applying adhesives is the fact that its distribution and bonding strength can hardly be controlled, resulting in a varying quality of the connection.

US 2009/0155084 A1 discloses a manufacturing method for a wind turbine blade which tries to overcome the above mentioned problem. The described method includes the assembly of a plurality of wind turbine blade segments in the longitudinal direction of the blade. Bonding the different wind turbine blade segments using an adhesive is done by providing a bonding grid which enhances the distribution of the adhesive. A disadvantage of this solution is the arrangement of the blade into several segments in the longitudinal direction as this restricts the use of strengthening elements extending in the longitudinal direction of the blade such as spar caps. Another disadvantage is that the above method is very cumbersome and therefore does not decrease the effort related to bonding blade segments by adhesives.

In US 2007/0251090 A1 a method for fabricating a blade using a mold having the shape of at least a portion of the blade is disclosed wherein the method comprises stacking pre-fabricated components.

EP 2338 669 A1 relates to a method of producing a composite shell structure comprising a reinforced fiber material embedded in a cured resin, i.e. a cured polymer material.
WO 03/035380 A1 discloses a method for making aerodynamic structures using an assembly of mandrels.
In US 7,364,407 B2 a wind turbine blade and a transitional shell blank for the manufacture of the shell of a wind turbine blade is disclosed, wherein the blade or the transitional shell blank is made of fibre-reinforced polymer including a first type of fibres of a first stiffness and a second type of fibres of a different stiffness.
EP 2 255 957 A1 describes a method of manufacturing a longitudinally extending composite structure including a shell part comprising a fibre reinforced polymer material including a polymer matrix and fibre material embedded in the polymer material.

### [Summary of Invention]

It is an object of at least some embodiments of the present invention to provide an improved manufacturing method for wind turbine blades.

The method of manufacturing a wind turbine blade comprises the steps of pre-manufacturing a first blade member in a mold. The term "pre-manufacturing" signifies in the context of the present application that the first blade member is at least partly pre-fabricated so that the first blade member is at least partly manufactured in advance before it is bonded to a second blade member. In some embodiments, pre-manufacturing refers to pre-fabricating the entire first blade member. Pre-manufacturing the first blade member comprises the step of bonding at least two structural members of the wind turbine blade with each other. Generally, the term "structural member" does not refer to insignificant small components of the blade, such as single fibers. The term rather relates to members having a considerable contribution to the structure and/or functions of the wind turbine blade. The structural members can, for example, comprise a spar cap, a core member, a root reinforcement member and/or a metal mesh member or a metal foil member. The structural members can be pre-manufactured before bonding them to each other in order to form the first pre-manufactured blade member. Alternatively, the structural members comprise blade building material and are formed during the bonding process. A vacuum-assisted infusion process is applied for bonding the at least two structural members.

A second blade member which comprises a trailing edge member or a leading edge member is positioned in the joining mold. The pre-manufactured first blade member is placed in a joining mold and bonded to the second blade member using a vacuum assisted infusion process to form an entire blade half shell as an integrated part of the blade. The joining mold can either be the same mold in which the first blade member was pre-manufactured or a different mold. The integrated part of the blade comprises a root reinforcement member. The root reinforcement member reinforces the blade to be manufactured in its root portion by providing structural strength. This is important since the blade is mounted to the hub in this region, which is thus exposed to high loads. In some embodiments, the root reinforcement member extends continuously from one transverse end of the blade to be manufactured to the other transverse end, i.e. from the trailing edge of the blade to be manufactured to the leading edge along the entire width of the blade, so that it covers the entire root portion of the blade to be manufactured.

In an exemplary embodiment, the pre-manufactured first blade member is positioned in the center of the joining mold and extends along substantially the entire length of the blade to be manufactured. The pre-manufactured first blade member comprises a spar cap. A spar cap is the main structural member of the blade carrying its weight and the loads acting on it. In some embodiments, the spar cap comprises composite material wherein at least the substantial part of the fibers run in the longitudinal direction of the blade, in other exemplary embodiments all of its fibers run along the longitudinal direction of the blade. Furthermore, the spar cap extends along substantially the entire length of the blade in some exemplary embodiments of the invention. The spar cap is integrated in the shell of the blade and is not disposed outside of the blade shell. In a further exemplary embodiment of the invention, the pre-manufactured first blade member comprises two spar caps. In an exemplary embodiment of the invention, the spar cap is pre-manufactured. Alternatively, the spar cap comprises blade building material which refers to any "dry" material, meaning material which has not been infiltrated with bonding means before. In some embodiments, the spar cap comprises composite material in which the substantial part of the fibers runs in the longitudinal direction of the blade. Such material could comprise unidirectional composite material or roving composite material.

Pre-manufacturing the first blade member can be done in one step by use of an infusion process or in several steps including pre-manufacturing the spar caps by infusion and connecting the spar caps and the shell structure by direct roving.

The bonding between the first and the second blade member is done using a vacuum assisted infusion process. The term "infusion process" relates to any bonding process including the step of infusing a bonding means for bonding. In some exemplary embodiments, the infusion process comprises only one single infusion step, i.e. one step at which an infusion is applied. The term "vacuum assisted" means that a vacuum is applied to the area in which the bonding means is infused. According to an exemplary embodiment, the vacuum is applied using a foil as a vacuum bag which is laid over the area to be infused allowing the creation of a vacuum. Once a vacuum is established, it ensures a uniform and controllable flow of the bonding means. Consequently, a good bonding quality can be achieved.

In some exemplary embodiments, the method comprises the steps of curing the pre-manufactured first blade member, demolding it and transporting it to the joining mold in which it is bonded to a second blade member to form an integrated part of the blade member. In an embodiment of the invention, the integrated part of the blade is cured and bonded to other blade members, again using a vacuum assisted infusion process.
These steps are repeated, until a half shell of the blade or the entire blade is completed. In this context, curing can refer to pre-curing, after which a certain extent of rigidity has been achieved but the full strength has not been established yet, or post-curing, after which the full strength of the member has developed.

Pre-manufacturing the first blade member comprises positioning a first root reinforcement member in a root portion of a mold. The mold can either be the joining mold in which the first blade member is bonded to the second blade member or a separate mold for pre-manufacturing the first pre-manufactured blade member. If the pre-manufactured blade member is pre-manufactured in a separate mold, the time in which the joining mold is occupied is reduced significantly resulting in a higher output of the manufacturing method.

The first root reinforcement member can be pre-manufactured or can comprise blade building material. The blade building material can, for example, comprise fibers, balsa, woven or stitched fabrics, monolithic structured composites, sandwich-type structured composites or sandwich cores. The term "sandwich-type structured composite" signifies a composite material which comprises two thin but stiff outer skins and a lightweight thick sandwich core being disposed between the skins. Even though the sandwich core normally exhibits low strength, its thickness provides the sandwich type structure with high bending stiffness and low overall weight.

According to some exemplary embodiments, the first root reinforcement member reinforces the root portion of the blade to be manufactured. For this purpose, the first root reinforcement member comprises composite material comprising fibers in exemplary embodiments of the invention, wherein the substantial part of the fibers further run in the longitudinal direction of the blade in some of these embodiments. The term "root portion" of the mold refers to a region of the mold in which the root portion of the blade is manufactured.

Pre-manufacturing the first blade member further comprises the step of positioning at least one core member in the mold. The core member can be pre-manufactured or can be composed of blade building material. In embodiments of the invention, the core member comprises composite material, in some exemplary embodiments a monolithic structured composite or a sandwich-type structured composite.

Furthermore, pre-manufacturing the first blade member comprises positioning at least one spar cap in the mold and using a vacuum assisted infusion process to form the first pre-manufactured blade member. According to an exemplary embodiment of the invention, the above steps are conducted consecutively in the above order. In some exemplary embodiments, pre-manufacturing the first pre-manufactured blade member comprises only one vacuum assisted infusion process which makes the pre-manufacturing process very
time and cost efficient.

In a further embodiment of the invention, pre-manufacturing the first blade member additionally comprises positioning at least one metal foil member or metal mesh member in the mold. The term "metal foil member of metal mesh member" refers to any metal foil or metal mesh being disposed in the blade, said metal foil or metal mesh members further being components of a blade lightning protection system in some exemplary embodiments. In an exemplary embodiment, the metal foil member or metal mesh member are positioned in the mold before the first root reinforcement member is positioned in it so that the metal foil member or metal mesh member is disposed radially behind the first root reinforcement member in the root portion of the mold. In some exemplary embodiments, the metal foil is located in close proximity to the outer surface of the blade so that it can directly function as a lightning receptor. In some exemplary embodiments the metal foil is only separated from the outer surface of the blade by a thin protection layer. In a further exemplary embodiment, the metal foil extends from the tip end area to the root end area of the blade so that it can function as a down conductor along the entire length of the blade. As the metal foil extends along the longitudinal direction of the blade, it can conduct the current of a lightning strike to the root end area of the blade independently of the position of the lightning strike. Incorporating the metal foil member or metal mesh member already while manufacturing the blade ensures an optimal integration of at least parts of a blade lightning protection system into the blade to be manufactured.

The second blade member comprises a trailing edge member or a leading edge member. The trailing edge member or the leading edge member can be pre-manufactured or they can comprise blade building material. The leading edge member is positioned next to the leading edge side of the first pre-manufactured blade member in some exemplary embodiments, while the trailing edge member is disposed next to the trailing edge side of first pre-manufactured blade member in some exemplary embodiments. In an exemplary embodiment, the leading edge member or the trailing edge member extend from the leading edge side or the trailing edge side of the first pre-manufactured blade member continuously until the end of the mold in transverse direction of the blade respectively.

According to some exemplary embodiments, the trailing edge member or the leading edge member comprise a trailing edge reinforcement member and a leading edge reinforcement member respectively. The function of these reinforcement members is to increase the structural strength of the trailing edge member or the leading edge member, in some exemplary embodiments in the region in which a manufactured blade half shell is connected to another manufactured blade half shell. For this purpose, the leading edge reinforcement member is disposed in a region proximate to the leading edge side of the leading edge member in some exemplary embodiments, whereas the trailing edge reinforcement member is disposed in a region proximate to the trailing edge side of the trailing edge member in some exemplary embodiments. In an exemplary embodiment of the invention, the leading edge reinforcement member and the trailing edge reinforcement member form the leading edge side or the trailing edge side of the leading edge member or the trailing edge member respectively.

The leading edge reinforcement member and the trailing edge reinforcement member comprise composite material in some embodiments in which the substantial part of the fibers extends along the longitudinal direction of the trailing edge reinforcement member or the leading edge reinforcement member. According to a further exemplary embodiment, the leading edge reinforcement member and the trailing edge reinforcement member comprise unidirectional composite material or roving composite material.

In an embodiment of the invention, the second blade member comprises a second root reinforcement member. This second root reinforcement member can be pre-manufactured or can comprise blade building material. For supporting the root region of the blade to be produced the second root reinforcement member comprises composite material in an aspect of the invention. The fibers extend substantially along the longitudinal direction of the blade in some embodiments. In a further exemplary embodiment of the invention, the length of the second root reinforcement member in longitudinal direction of the blade corresponds to the length of the first root reinforcement member in the same direction.

In an aspect of the invention, the second root reinforcement member and the first root reinforcement member are arranged at a distance to each other for at least a part of the length of the root reinforcement members in longitudinal direction of the blade in which the first root reinforcement member and the second root reinforcement member consequently do not have contact to each other. In some exemplary embodiments, the first root reinforcement member and the second root reinforcement member are arranged at a distance to each other for at least 30 percent, in other embodiments for at least 50 percent, in even other embodiments for at least 75 percent, of the length of the root reinforcement members.

The manufacturing method further comprises positioning a second blade member comprising a trailing edge member or a leading edge member in the joining mold. A second blade member comprising the leading edge member is positioned next to the leading edge side of the first pre-manufactured blade member in some exemplary embodiments, while a second blade member comprising the trailing edge member is positioned next to the trailing edge side of the first pre-manufactured blade member in some exemplary embodiments.

The manufacturing method further comprises the steps of positioning a second root reinforcement member in a root portion of the joining mold and using a vacuum-assisted infusion process to form an entire blade half shell of a blade suction side or a blade pressure side respectively. In an exemplary embodiment, bonding the first pre-manufactured blade member with the other blade members necessitates only one vacuum assisted infusion process in order to manufacture a complete blade half shell of a suction side or a pressure side of the blade. Applying only one infusion process, i.e. only one single infusion step in which an infusion is applied, in the joining mold for manufacturing the entire blade half shell reduces the time in which the joining mold is occupied significantly and thus ensures a more cost and time efficient manufacturing process. Optionally, the blade half shell of the suction side and the blade half shell of the pressure side are bonded to form an entire blade. Bonding the blade half shells is achieved by means of bonding paste in some exemplary embodiments.

According to an embodiment of the invention, the second root reinforcement member, the trailing edge member or the leading edge member comprises a composite material having a first section with fibers. In a further embodiment, the fibers of the first section are substantially arranged in at least two preferred directions. Due to the arrangement along the preferred directions, the first section exhibits a great strength along these preferred directions. In some exemplary embodiments, the second root reinforcement member, the trailing edge member or the leading edge member comprises two sections with fibers, namely a first section and a second section, of which the first section comprises fibers running in two preferred directions while the second section comprises fibers running in three preferred directions.

According to an embodiment of the invention, a protection layer is positioned in the joining mold. In some exemplary embodiments, this protection layer is positioned in the joining mold before positioning any other member so that the protection layer is arranged in direct contact with the joining mold. In an exemplary embodiment, the protection layer is positioned in the entire joining mold so that the inner surface of the joining mold is completely covered by the protection layer. After manufacturing the blade, the protection layer thus forms the entire outer surface of the blade to be manufactured and protects it from outer influences. In some exemplary embodiments, the protection layer comprises a thin glass fleece layer or a gel coat layer.

In an embodiment of the invention, at least one shear web is pre-manufactured and bonded to the pre-manufactured first blade member. In some exemplary embodiments, bonding the at least one shear web with the manufactured first blade member is achieved by using bonding paste.

In some embodiments, the pre-manufactured first blade member comprises an integrated bonding flange for the connection to other blade members. In an alternative exemplary embodiment, the second blade member comprises at least one bonding flange for the connection to the pre-manufactured first blade member. In some exemplary embodiment, the first blade member can comprise one bonding flange on each of its longitudinal sides, the trailing edge side and the leading edge side, respectively. According to an exemplary embodiment, the bonding flanges extend along the whole length of the leading edge side and trailing edge side of the first blade member. In some exemplary embodiments, the end faces of the pre-manufactured first blade member also comprise bonding flanges. In an exemplary embodiment, the bonding flange comprises a peel ply as a thin protective layer which is removed before the infusion process in order to ensure a good surface quality for the connection to another blade member.

In a further embodiment of the invention, the second blade member comprises blade building material which is positioned in the joining mold overlapping the first blade member, in some embodiments its bonding flange. A vacuum is applied to the blade building material which is infused by bonding means, therefore infiltrating the blade building material with the bonding means. The second blade member is therefore formed during the bonding process to the first blade member. In an exemplary embodiment of the invention, bonding means comprise epoxy resin. In a further exemplary embodiment, heat is applied to the integrated part for curing the bonding means. This can be achieved by use of an integrated heating system.

In an exemplary embodiment of the invention, a complete half shell of the blade is manufactured by applying the above method to each one of the bonding flanges on the trailing edge side and the leading edge side of the pre-manufactured first blade member, respectively. This is done by filling the joining mold along its transverse direction and bonding the blade material to the pre-manufactured first blade member until an entire blade half shell is produced.

In an alternative embodiment, the second blade member is also pre-manufactured. The pre-manufactured second blade member is placed next to the pre-manufactured first blade member in such a way that an interspace, a bonding gap, between the two blade members exists. The second blade member can be placed next to the pre-manufactured first blade member in cross direction or in longitudinal direction of the blade to be manufactured. The second blade member can also be positioned on top of the pre-manufactured first blade member. A vacuum is applied to the bonding gap, in some embodiments by using a vacuum bag such as a plastic foil which enables an air tight seal so that a vacuum can be applied. Subsequently, the bonding gap is infused with bonding means, in some exemplary embodiments epoxy resin, which after curing will establish the connection. Compared to using gluing paste, the use of epoxy resin in combination with a vacuum assisted infusion process is advantageous as it allows a better control of bonding gap thickness and bonding quality. According to an exemplary embodiment of the invention, a flow medium is inserted in the bonding gap for allowing an even more improved flow of the bonding means. The flow medium can be a distribution means and is structured, such as e.g. a mat, in some exemplary embodiments which provides passageways for the bonding means for a continuous and controllable flow. In an exemplary embodiment, the bonding gap is filled with some suitable sort of "dry" material, this "dry" material comprising fabric or textile material in some embodiments, which will act as a flow medium for the bonding means. In a further exemplary embodiment, heat is applied to the integrated part for curing the bonding means, in some exemplary embodiments by means of an integrated heating system.

In an exemplary embodiment, the above process is repeated until a half shell of a blade or an entire blade is manufactured. In some exemplary embodiments, the above method comprises the steps of curing the second pre-manufactured blade member, demolding it and transporting it to the joining mold. These steps can be repeated, until all remanufactured blade members are completed.

According to an embodiment of the invention, the first pre-manufactured blade member is enveloped with a covering member comprising composite material. Enveloping signifies completely enclosing the first pre-manufactured blade member. The covering member can either consist of only one part enclosing the first pre-manufactured blade member entirely or it can be composed of several parts which together envelope the first pre-manufactured blade member. In some exemplary embodiments, the fibers of the composite material of the covering member substantially run in at least two preferred directions, or in two preferred directions or in three preferred directions. In an exemplary embodiment, a first part of the covering member is positioned in the mold. On top of this first part of the covering member, the first pre-manufactured blade member is positioned. After this, a second part of the covering member is positioned next to and on top of the first pre-manufactured blade member in such a way that together with the first part of the covering member it envelops the first pre-manufactured blade member completely.

### [Brief Description of Drawings]

Embodiments of the present invention will be described below with reference to the following figures which show in schematic representation
[Fig. 1]

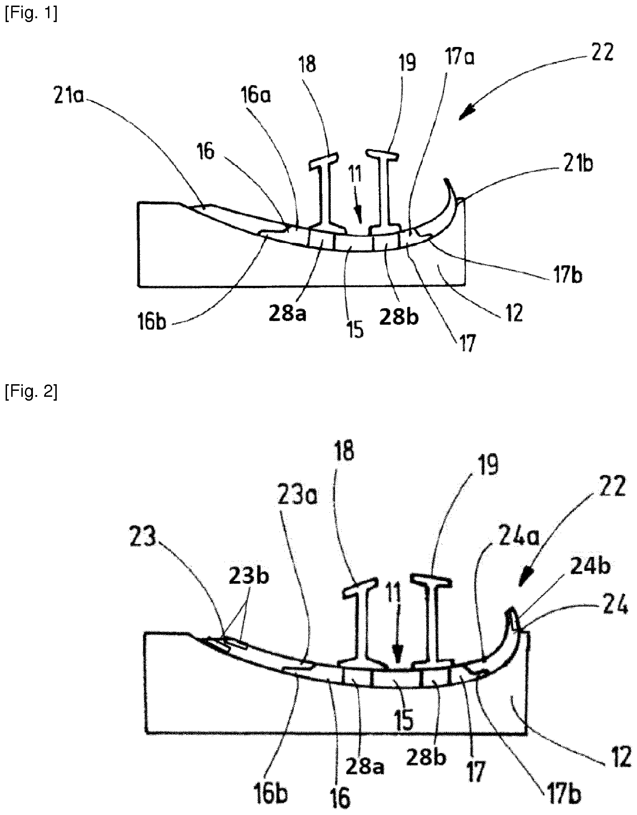

   Figure 1 is a cross sectional view of a pre-manufactured first blade member and blade building material in a joining mold in the area of the middle portion of a blade;
[Fig. 2]
   Figure 2 is a cross sectional view of a pre-manufactured first blade member, second blade members in a joining mold in the area of the middle portion of a blade;
[Fig. 3]

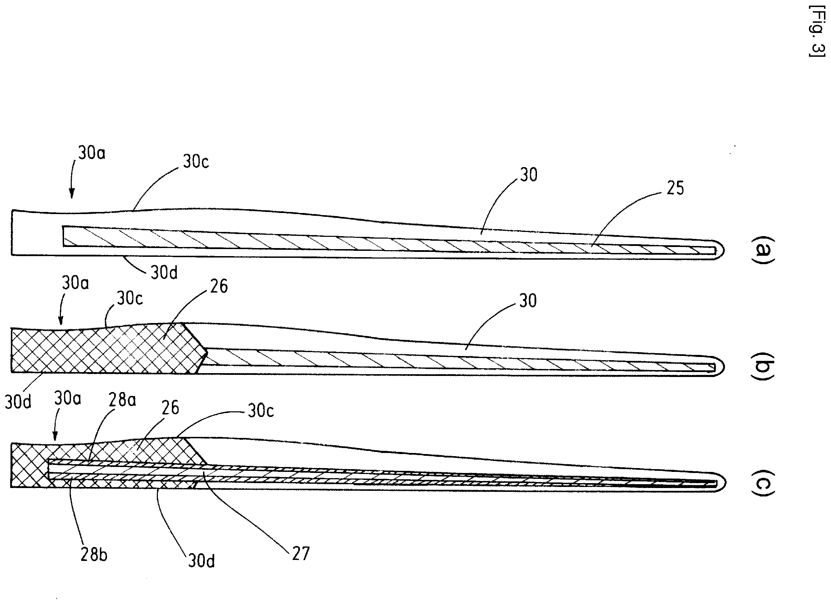

   Figures 3(a) to 3(c) are front views of a mold at different first blade member pre-manufacturing stages;
[Fig. 4]

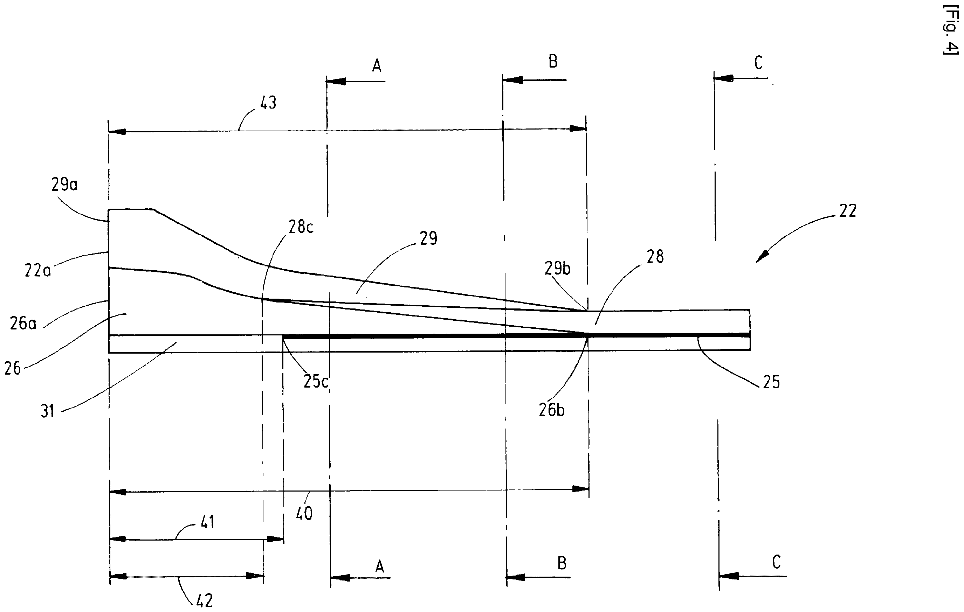

   Figure 4 is a longitudinal sectional view of a part of a blade half shell; and
[Fig. 5]

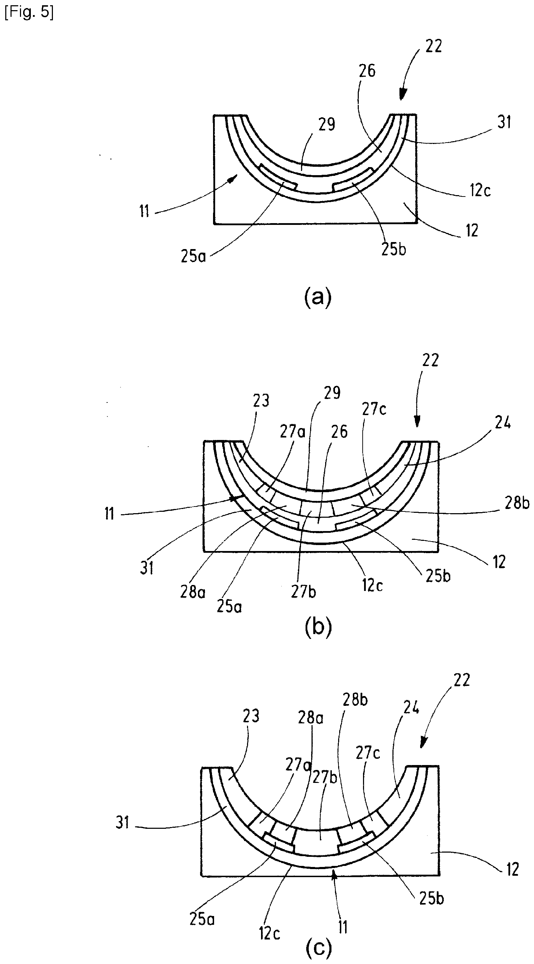

   Figures 5(a) to 5(c) are cross sectional views of a joining mold and a blade half shell along the lines A-A, B-B and C-C of figure 4.

### [Description of Embodiments]

Figure 1 shows a cross sectional view of a pre-manufactured first blade member 11, second blade members 21a and 21b and of a section of a joining mold 12. The joining mold 12 comprises a shaped cavity which is utilized to give an intended form to a blade member or blade half shell to be manufactured. The pre-manufactured first blade member 11 comprises two spar caps 28a, 28b which are connected to each other via a sandwich structure 15 consisting of a light weighted core surrounded by fiber reinforced material. Furthermore, the pre-manufactured first blade member 11 comprises two bonding flanges, namely one bonding flange 16 at the trailing edge side and one bonding flange 17 at the leading edge side of the pre-manufactured first blade member 11. The
bonding flanges 16, 17 extend continuously along the longitudinal direction of the pre-manufactured first blade member 11. The bonding flanges 16, 17 comprise a first part 16a, 17a which is arranged adjoining the joining mold 12 and one spar cap 28a, 28b, respectively. Furthermore, the bonding flanges 16, 17 comprise a second part 16b, 17b which is formed integrally with the first part 16a, 17a. The second parts 16b, 17b are formed as a flat extension adjoining the joining mold 12. The bonding flanges 16, 17 together amount to about 30 to 50 percent of the width of the pre-manufactured
first blade member 11 in cross direction. After positioning the pre-manufactured first blade member, it is bonded with two shear webs 18, 19 which form second blade members using bonding paste. For this purpose, one shear web 18, 19 is positioned on the inner side of one spar cap 28a, 28b of the pre-manufactured first blade member 11, respectively.

The second blade members 21a, 21b are comprised of blade building material placed next to the pre-manufactured first blade member 11 on each of its longitudinal sides respectively. The blade building material 21a, 21b is positioned along the longitudinal sides of the pre-manufactured first blade member 11 in such a way that it overlaps with the second parts 16b, 17b of the bonding flanges 16, 17 of the pre-manufactured first blade member 11. The pre-manufactured first blade member 11 and the blade building material 21a, 21b are bonded using a vacuum assisted infusion process respectively by applying a vacuum to the blade building material 21a, 21b and infusing it with bonding means. As a result, two other blade members are formed during the two bonding processes. By means of the bonding processes, an entire blade half shell 22 is produced.

Figure 2 shows a cross sectional view of a pre-manufactured first blade member 11 comprising two spar caps 28a, 28b in a joining mold 12 in the area of the middle portion of the blade half shell to be manufactured. The pre-manufactured first blade member 11 comprises a bonding flange 16 at the trailing edge side and a bonding flange 17 at its leading edge side. Next to the bonding flange 16 at the trailing edge side a pre-manufactured trailing edge member 23 is placed which comprises a mating flange 23a which corresponds to the bonding flange 16 of the pre-manufactured first blade member 11. At the bonding flange 17 at the leading edge side of the pre-manufactured first blade member 11 a pre-manufactured leading edge member 24 is positioned which also comprises a mating flange 24a corresponding to the bonding flange 17 of the pre-manufactured first blade member 11. The leading edge member 24 comprises a leading edge reinforcement member 24b at its trailing edge side, while the trailing edge member 23 has a trailing edge reinforcement member 23b at its trailing edge side. The trailing edge reinforcement member 23b and the leading edge reinforcement member 24b are formed as unidirectional layers of composite material which form the surface of the trailing edge member 23 or leading edge member 24 at its trailing edge side or leading edge side respectively.

The pre-manufactured trailing edge member 23 and the pre-manufactured leading edge member 24 are bonded to the pre-manufactured first blade member 11 by means of using a vacuum assisted infusion process. After the bonding processes, an entire half shell 22 of a blade is produced.

In figures 3(a) to 3(c) front views of a mold 30 at different first blade member pre-manufacturing stages are shown. In figure 3(a) a metal foil member 25 is positioned in the center of the mold 30 along its longitudinal direction. The metal foil member 25 extends along substantially the entire length of the blade half shell to be manufactured. Only in a part of the root portion 30a of the mold 30 the metal foil member 25 is not arranged. In figure 3(b) a first root reinforcement member 26 is positioned on top of the metal foil member 25 in a root portion 30a of the mold 30. The first root reinforcement member 26 extends continuously from one transverse end 30c of the mold 30 to the other transverse end 30d of the mold 30 so that it covers the entire root portion 30a of the mold 30. Figure 3(c) shows one core member 27 and two spar caps 28a, 28b being disposed on top of the first root reinforcement member 26 and the metal foil member 25 which run almost along the entire length of the mold except for a part at the root portion 30a of the mold 30. After using a vacuum assisted infusion process, the first pre-manufactured blade member is manufactured.

In figure 4 a longitudinal sectional view of a part of a blade half shell 22 at its root end 22a is shown. A protection layer extends continuously from the first root end 22a of the blade half shell 22 towards the tip end of the blade half shell 22 which is not depicted in this figure. A metal foil member 25 extends from a first end 25c which is placed in a distance 41 from the root end 22a of the blade half shell 22 towards the tip end of the blade half shell 22. A first root reinforcement member 26 is disposed at the root end 22a of the blade half shell 22 extending from a first end 26a beyond the first end 25c of the metal foil member 25 to a second end 26b. The distance 40 from the second end 26b of the first root reinforcement member 26 to the root end 22a of the blade half shell 22 is larger than the distance 41 of the first end 25c of the metal foil member 25 to the root end 22a.

A spar cap 28 is disposed on top of the metal foil member 25 and the first root reinforcement member 26 extending from a first end 28c towards the tip end of the blade. The distance 42 of the first end 28c of the spar cap 28 to the root end 22a of the blade half shell 22 is smaller than the distance 41 of the first end 25c of the metal foil member 25 and smaller than the distance 40 of the second end 26b of the first root reinforcement member 26.

At last, a second root reinforcement member 29 is positioned on top of the first root reinforcement member 26 and the spar cap 28 extending from a first end 29a at the root end 22a of the blade half shell 22 to a second end 29b. The distance 43 of the second end 29b of the second root reinforcement member 29 to the root end 22a of the blade half shell 22 is as large as the distance 40 of the second end 26b of the first root reinforcement member 26 to the root end 22a of the blade half shell 22. The first root reinforcement member 26 and the second root reinforcement member 29 taper from their first ends 26a, 29a towards their second ends 26b, 29b. The spar cap 28 tapers in opposite direction towards its first end 28c. The metal foil member 25, the first root reinforcement member 26, the second root reinforcement member 29 and the spar cap 28 are arranged in such a way that they pile up in an interweaving way.

Figures 5(a) to 5(c) show cross sectional views of a joining mold 12 and a blade half shell 22 at the different positions along the length of the blade half shell 22, namely along the lines A-A, B-B and C-C which can be seen in figure 4. While figures 5(a) and 5(b) show cross sections of the joining mold 12 as well as the blade half shell 22 at two different positions in the root portion 12a of the joining mold 12, namely along the lines A-A and B-B, figure 5(c) displays the cross section of the blade half shell 22 and the joining mold 12 at a position in the middle portion of the joining mold 12 along the line C-C. In figures 5(a) to 5(c) a protection layer 31 is shown which covers the inner surface 12e of the joining mold 12 completely. On top of this protection layer 31 two metal foil members 25a, 25b are arranged which extend along substantially the entire length of the joining mold 12. A first root reinforcement member 26 is disposed on top of the metal foil members 25a, 25b extending along the entire root portion 12a of the joining mold 12. Three core members 27a, 27b, 27c and two spar caps 28a, 28b are disposed on top of the protection layer 31 and the first root reinforcement member 26 in the root portion 12a of the joining mold 12. The spar caps 28a, 28b are disposed directly on top of the metal foil members 25a, 26b in the root portion 12a or on top of the first root reinforcement member 26 in such a way that the metal foil members 25a, 25b are disposed radially behind the spar caps 28a, 28b.

The metal foil members 25a, 25b, the first root reinforcement member 26, the core members 27a, 27b, 27c and the spar caps 28a, 28b together form the first pre-manufactured blade member 11. A trailing edge member 23 and a leading edge member 24 are placed next to the first pre-manufactured blade member 11. A second root reinforcement member 29 is placed in a root portion 12a of the joining mold 12 on top of the first pre-manufactured blade member 11. The trailing edge member 23, the leading edge member 24 and the second root reinforcement member 29 are bonded to the first pre-manufactured blade member 11 by means of a vacuum assisted infusion process.

## Claims

1. A method for manufacturing a wind turbine blade, comprising the steps of:
pre-manufacturing a first blade member (11),
wherein pre-manufacturing the first blade member (11) comprises bonding at least two structural members of the wind turbine blade,
positioning said pre-manufactured first blade member (11) in a joining mold (12),
positioning a second blade member (21a, 21b) which comprises a trailing edge member (23) or a leading edge member (24) in the joining mold (12), and
bonding said first blade member (11) with the second blade member (21a, 21b) using a vacuum assisted infusion process so as to form an entire blade half shell (22) as an integrated blade part,
said integrated blade part comprising a root reinforcement member (26), and
wherein pre-manufacturing the first blade member (11) comprises the steps of:
positioning a first root reinforcement member (26) in a root portion (30a) of a mold (30),
positioning at least one core member (27) in the mold (30),
positioning at least one spar cap (28a, 28b) in the mold (30), and
using a vacuum-assisted infusion process to form the first pre-manufactured blade member (11).

2. The method according to claim 1, wherein:
in the step of positioning the first root reinforcement member (26), the first root reinforcement member (26) is positioned to extend from a first end (26a) of the first root reinforcement member (26) that is at a root end of the integrated blade part to a second end (26b) of the first root reinforcement member (26);
in the step of positioning the at least one spar cap (28a, 28b), the at least one spar cap (28a, 28b) is positioned to extend from a first end (28c) of the at least one spar cap (28a, 28b) toward a tip end of the integrated blade part; and
a distance (42) from the root end (22a) to the first end (28c) of the at least one spar cap (28a, 28b) is smaller than a distance (40) from the root end (22a) to the second end (26b) of the first root reinforcement member (26).

3. The method according to claim 2, wherein pre-manufacturing the first blade member (11) additionally comprises the step of positioning at least one metal foil member (25, 25a, 25b) or metal mesh member in the mold (30) for forming the first pre-manufactured blade member (11).

4. The method according to claim 1,
wherein the second blade member (21a, 21b) comprises a second root reinforcement member (29).

5. The method according to claim 1,
wherein the trailing edge member (23) and the leading edge member (24) comprise fibers, and
wherein at least the substantial part of the fibers extends in the longitudinal direction of the blade.

6. The method according to claim 1, comprising the steps of
positioning a second root reinforcement member (29) in a root portion (30) of the joining mold (12), and
using a vacuum-assisted infusion process to form an entire blade half shell (22) of a blade suction side or a blade pressure side respectively,
and optionally, bonding the blade half shell (22) of the suction side and the blade half shell (22) of the pressure side to form an entire blade.

7. The method according to claim 6, wherein the second root reinforcement member (29), the trailing edge member (23) or the leading edge member (24) comprises a composite material, said composite material comprises a first section with fibers.

8. The method according to claim 7, wherein the fibers of the first section are substantially arranged in at least two preferred directions.

9. The method according to claim 1,
wherein a protection layer (31) is positioned in the joining mold (12).

10. The method according to claim 6, comprising the step of
pre-manufacturing at least one shear web (18, 19), and
bonding the pre-manufactured first blade member (11) with the pre-manufactured shear web (18, 19).

11. The method according to claim 1,
wherein the first blade member (11) comprises a spar cap (28a, 28b), and
wherein the spar cap (28a, 28b) comprises fibers and wherein at least the substantial part of the fibers extend in the longitudinal direction of the blade.

12. The method according to claim 1,
wherein the first blade member (11) comprises a bonding flange (16, 17) for bonding said first blade member (11) to the second blade member (21a, 21b).

13. The method according to claim 1,
wherein the second blade member (21a, 21b) is made up of blade building material, comprising the steps of:
positioning said blade building material in the joining mold (12), wherein at least part of the blade building material overlaps the first blade member (11),
applying a vacuum to the blade building material, and
infusing the blade building material with bonding means.

14. The method according to claim 1,
wherein the second blade member (21a, 21b) is pre-manufactured, comprising the steps of:
positioning said pre-manufactured second blade member (21a, 21b) next to the first blade member (11) in the joining mold (12) such that an interspace in between them exists,
applying a vacuum to said interspace between the first blade member (11) and the second blade member (21a, 21b), and
infusing bonding means into the interspace.

15. The method according to claim 1,
wherein the first pre-manufactured blade member (11) is enveloped with a covering member, said covering member being composed of composite material.

## Patentansprüche

1. Verfahren zum Fertigen eines Windturbinenblatts, umfassend die Schritte:
Vorfertigung eines ersten Blattelements (11),
wobei die Vorfertigung des ersten Blattelements (11) das Verbinden von wenigstens zwei Bauteilen des Windturbinenblatts umfasst,
Positionieren des vorgefertigten ersten Blattelements (11) in einer Fügeform (12),
Positionieren eines zweiten Blattelements (21a, 21b), welches ein Austrittskantenelement (23) oder ein Eintrittskantenelement (24) umfasst, in der Fügeform (12) und
Verbinden des ersten Blattelements (11) mit dem zweiten Blattelement (21a, 21b) unter Verwendung eines vakuumunterstützten Infusionsverfahrens (Vacuum Assisted Infusion Process), um eine gesamte Blatthalbschale (22) als einen integrierten Blattteil zu bilden,
wobei der integrierte Blattteil ein Wurzelverstärkungselement (26) umfasst, und
wobei die Vorfertigung des ersten Blattelements (11) die folgenden Schritte umfasst:
Positionieren eines ersten Wurzelverstärkungselements (26) in einem Wurzelbereich (30a) einer Form (30),
Positionieren wenigstens eines Kernelements (27) in der Form (30),
Positionieren wenigstens eines Holmgurtes (28a, 28b) in der Form (30), und
Anwenden eines vakuumunterstützten Infusionsverfahrens (Vacuum Assisted Infusion Process), um das erste vorgefertigte Blattelement (11) zu bilden.

2. Verfahren gemäß Anspruch 1, wobei:
beim Schritt des Positionierens des ersten Wurzelverstärkungselements (26) das erste Wurzelverstärkungselement (26) so positioniert ist, dass es sich von einem ersten Ende (26a) des ersten Wurzelverstärkungselements (26), das sich an einem Wurzelende des integrierten Blattteils befindet, zu einem zweiten Ende (26b) des ersten Wurzelverstärkungselements (26) erstreckt;
beim Schritt des Positionierens des wenigstens einen Holmgurtes (28a, 28b) der wenigstens eine Holmgurt (28a, 28b) so positioniert ist, dass er sich von einem ersten Ende (28c) des wenigstens einen Holmgurtes (28a, 28b) zu einem Spitzen-Ende des integrierten Blattteils erstreckt; und
ein Abstand (42) von dem Wurzelende (22a) zu dem ersten Ende (28c) des wenigstens einen Holmgurtes (28a, 28b) kleiner als der Abstand (40) von dem Wurzelende (22a) zu dem zweiten Ende (26b) des ersten Wurzelverstärkungselements (26) ist.

3. Verfahren gemäß Anspruch 2, wobei die Vorfertigung des erstes Blattelements (11) zusätzlich den Schritt der Positionierung wenigstens eines Metallfolienelements (25, 25a, 25b) oder Metallgitterelements in der Form (30) zum Formen des ersten vorgeformtem Blattelements (11) umfasst.

4. Verfahren gemäß Anspruch 1,
wobei das zweite Blattelement (21a, 21b) ein zweites Wurzelverstärkungselement (29) umfasst.

5. Verfahren gemäß Anspruch 1
wobei das Austrittskantenelement (23) und das Eintrittskantenelement (24) Fasern umfassen, und
wobei sich wenigstens der wesentliche Teil der Fasern in Längsrichtung des Blattes erstreckt.

6. Verfahren gemäß Anspruch 1, umfassend die Schritte
Positionieren des zweiten Wurzelverstärkungselements (29) in einem Wurzelbereich (30) der Fügeform (12), und
Anwenden eines vakuumunterstützten Infusionsverfahrens (Vacuum Assisted Infusion Process), um eine gesamte Blatthalbschale (22) einer Blattsaugseite oder entsprechend einer Blattdruckseite zu bilden,
und gegebenenfalls die Blatthalbschale (22) der Saugseite und die Blatthalbschale (22) der Druckseite zu verbinden, um ein ganzes Blatt zu bilden.

7. Verfahren gemäß Anspruch 6, wobei das zweite Wurzelverstärkungselement (29), das Austrittskantenelement (23) oder das Eintrittskantenelement (24) einen Verbundwerkstoff umfasst, wobei der Verbundwerkstoff einen ersten Abschnitt mit Fasern umfasst.

8. Verfahren gemäß Anspruch 7, wobei die Fasern des ersten Abschnitts im Wesentlichen in wenigstens zwei bevorzugten Richtungen angeordnet sind.

9. Verfahren gemäß Anspruch 1,
wobei eine Schutzschicht (31) in der Fügeform (12) positioniert ist.

10. Verfahren gemäß Anspruch 6, umfassend den Schritt
Vorfertigung des wenigstens einen Scherstegs (18, 19) und
Verbinden des vorgefertigten ersten Blattelements (11) mit dem vorgefertigten Schersteg (18, 19).

11. Verfahren gemäß Anspruch 1,
wobei das erste Blattelement (11) einem Holmgurt (28a, 28b) umfasst, und
wobei der Holmgurt (28a, 28b) Fasern umfasst und wobei sich wenigstens der wesentliche Teil der Fasern in Längsrichtung des Blatts erstreckt.

12. Verfahren gemäß Anspruch 1,
wobei das erste Blattelement (11) einen Verbindungsflansch (16, 17) zum Verbinden des ersten Blattelements (11) mit dem zweiten Blattelement (21a, 21b) umfasst.

13. Verfahren gemäß Anspruch 1,
wobei das zweite Blattelement (21a, 21b) aus einem Blattbaumaterial besteht, umfassend die Schritte:
Positionieren des Blattbaumaterials in der Fügeform (12), wobei wenigstens ein Teil des Blattbaumaterials das erste Blattelement (11) überlappt,
Beaufschlagen des Blattbaumaterials mit Vakuum und
Einbringen von Verbindemitteln in das Blattbaumaterial.

14. Verfahren gemäß Anspruch 1
wobei das zweite Blattelement (21a, 21b) vorgefertigt ist, umfassend die folgenden Schritte:
Positionieren des vorgefertigten zweiten Blattelementes (21a, 21b) neben dem ersten Blattelement (11) in der Fügeform (12), so dass ein Zwischenraum dazwischen vorhanden ist,
Beaufschlagen des Zwischenraums zwischen dem ersten Blattelement (11) und
dem zweiten Blattelement (21a, 21b) mit Vakuum und
Einbringen von Bindemitteln in den Zwischenraum.

15. Verfahren gemäß Anspruch 1,
wobei das erste vorgefertigte Blattelement (11) mit einem Abdeckelement umhüllt ist, wobei das Abdeckelement aus einem Verbundwerkstoff besteht.

## Revendications

1. Procédé de fabrication d'une pale de turbine éolienne, comprenant les étapes suivantes :
la préfabrication d'un premier élément de pale (11),
dans lequel la préfabrication du premier élément de pale (11) comprend le collage d'au moins deux éléments structuraux de la pale de turbine éolienne,
le positionnement dudit premier élément de pale (11) préfabriqué dans un moule d'assemblage (12), le positionnement d'un deuxième élément de pale (21a, 21b), qui comprend un élément de bord de fuite (23) ou un élément de bord d'attaque (24), dans le moule d'assemblage (12), et
le collage dudit premier élément de pale (11) avec le deuxième élément de pale (21a, 21b) en utilisant un processus d'infusion assistée par vide de manière à former une demi-coque de pale (22) entière en tant que partie intégrante de pale,
ladite partie intégrante de pale comprenant un élément de renforcement de pied (26), et dans lequel la préfabrication du premier élément de pale (11) comprend les étapes suivantes :
le positionnement d'un premier élément de renforcement de pied (26) dans une partie de pied (30a) d'un moule (30),
le positionnement d'au moins un élément d'âme (27) dans le moule (30),
le positionnement d'au moins une semelle de longeron (28a, 28b) dans le moule (30), et
l'utilisation d'un processus d'infusion assistée par vide pour former le premier élément de pale (11) préfabriqué.

2. Procédé selon la revendication 1, dans lequel :
dans l'étape de positionnement du premier élément de renforcement de pied (26), le premier élément de renforcement de pied (26) est positionné de manière à s'étendre d'une première extrémité (26a) du premier élément de renforcement de pied (26), qui est une extrémité de pied de la partie intégrante de pale, jusqu'à une deuxième extrémité (26b) du premier élément de renforcement de pied (26) ;
dans l'étape de positionnement de l'au moins une semelle de longeron (28a, 28b), l'au moins une semelle de longeron (28a, 28b) étant positionnée pour s'étendre d'une première extrémité (28c) de l'au moins une semelle de longeron (28a, 28b) vers une extrémité de bout de la partie intégrante de pale ; et
une distance (42) entre l'extrémité de pied (22a) et la première extrémité (28c) de l'au moins une semelle de longeron (28a, 28b) étant inférieure à une distance (40) entre l'extrémité de pied (22a) et la deuxième extrémité (26b) du premier élément de renforcement de pied (26).

3. Procédé selon la revendication 2, dans lequel la préfabrication du premier élément de pale (11) comprend additionnellement l'étape de positionnement d'au moins un élément de feuille métallique (25, 25a, 25b) ou d'un élément de treillis métallique dans le moule (30) pour former le premier élément de pale préfabriqué ( 11 ) .

4. Procédé selon la revendication 1, dans lequel le deuxième élément de pale (21a, 21b) comprend un deuxième élément de renforcement de pied (29).

5. Procédé selon la revendication 1, dans lequel l'élément de bord de fuite (23) et l'élément de bord d'attaque (24) comprennent des fibres, et
dans lequel au moins la partie substantielle des fibres s'étend dans la direction longitudinale de la pale.

6. Procédé selon la revendication 1, comprenant les étapes de positionnement d'un deuxième élément de renforcement de pied (29) dans une partie de pied (30) du moule d'assemblage (12), et
l'utilisation du processus d'infusion assistée par vide pour former une demi-coque de pale (22) entière respectivement d'un côté d'extrados de pale ou d'un côté d'intrados de pale,
et en option, le collage de la demi-coque de pale (22) du côté d'extrados et de la demi-coque de pale (22) du côté d'intrados pour former une pale entière.

7. Procédé selon la revendication 6, dans lequel le deuxième élément de renforcement de pied (29), l'élément de bord de fuite (23) ou l'élément de bord d'attaque (24), comprend un matériau composite, ledit matériau composite comprenant une première section avec des fibres.

8. Procédé selon la revendication 7, dans lequel les fibres de la première section sont sensiblement disposées dans au moins deux directions préférées.

9. Procédé selon la revendication 1, dans lequel une couche de protection (31) est positionnée dans le moule d'assemblage (12).

10. Procédé selon la revendication 6, comprenant l'étape de
préfabrication d'au moins une âme de cisaillement (18, 19), et
le collage du premier élément de pale (11) préfabriqué avec l'âme de cisaillement (18, 19) préfabriquée.

11. Procédé selon la revendication 1,
dans lequel le premier élément de pale (11) comprend une semelle de longeron (28a, 28b), et
dans lequel la semelle de longeron (28a, 28b) comprend des fibres, et dans lequel au moins la partie substantielle des fibres s'étend dans la direction longitudinale de la pale.

12. Procédé selon la revendication 1,
dans lequel le premier élément de pale (11) comprend une bride de collage (16, 17) pour coller ledit premier élément de pale (11) au deuxième élément de pale (21a, 21b).

13. Procédé selon la revendication 1,
dans lequel le deuxième élément de pale (21a, 21b) est formé par un matériau de formation de pale, comprenant les étapes suivante :
le positionnement dudit matériau de formation de pale dans le moule d'assemblage (12), dans lequel au moins une partie du matériau de formation de pale est en superposition avec le premier élément de pale (11), l'application d'un vide au matériau de formation de pale, et
l'infusion du matériau de formation de pale avec un moyen de collage.

14. Procédé selon la revendication 1,
dans lequel le deuxième élément de pale (21a, 21b) est préfabriqué, comprenant les étapes suivantes :
le positionnement dudit deuxième élément de pale (21a, 21b) préfabriqué à côté du premier élément de pale (11) dans le moule d'assemblage (12) de manière à ce qu'un espace intermédiaire existe entre eux,
l'application d'un vide audit espace intermédiaire entre le premier élément de pale (11) et le deuxième élément de pale (21a, 21b), et
l'infusion d'un moyen de collage dans l'espace intermédiaire.

15. Procédé selon la revendication 1,
dans lequel le premier élément de pale (11) préfabriqué est enveloppé avec un élément de couverture, ledit élément de couverture se composant d'un matériau composite.
